# EUROPÄISCHE PATENTSCHRIFT

(11) **EP 0 302 955 B1**
(45) Veröffentlichungstag und Bekanntmachung des Hinweises auf die Patenterteilung: **16.06.1993**
(21) Anmeldenummer: 87111597.8
(22) Anmeldetag: 11.08.1987
(51) Int. Cl.: G05B 19/405

(54) **Verfahren zum rechnergestützten Erstellen von technischen Fertigungsunterlagen für Werkstücke**
Method of producing technical engineering data for work pieces by means of a computer
Méthode de réalisation de pièces techniques au moyen d'un ordinateur

(43) Veröffentlichungstag der Anmeldung: 15.02.1989
(73) Patentinhaber: Krauss-Maffei Aktiengesellschaft, 80997 München (DE)
(72) Erfinder: Bauer, Wolfgang, Dipl.-Ing., D-8000 München 70 (DE); Feller, Johannes, Dipl.-Ing., D-8000 München 19 (DE); Fehlau, Peter, D-8000 München 71 (DE)
(74) Vertreter: Konle, Tilmar, Dipl.-Ing.

(56) Entgegenhaltungen:
- COMPUTERS IN INDUSTRY, Band 8, Nr. 4, Juni/Juli 1987, Seiten 293-309, Elsevier Science Publishers B.V., Amsterdam, NL; H.-P. WANG: "Intelligent reasoning for process planning"
- WT/WERKSTATTSTECHNIK, Band 77, Nr. 3, März 1987, Seiten 129-133, Springer Verlag, Berlin, DE; W. WALTER et al.: "Universeller CAD/NC-Kopplungsbaustein für NC-Programmiersystem"

## Beschreibung

Die Erfindung bezieht sich auf ein Verfahren gemäß dem Oberbegriff des Patentanspruchs 1. Ein derartiges Verfahren ist aus der Zeitschrift "COMPUTERS IN INDUSTRY", Bd. 8, Nr. 4, Juni/Juli 1987, Seiten 293-309, herausgegeben von Elsevier Science Publishers B.V., Amster-dam, Niederlande, bekannt.

Bei bekannten CAD-Systemen (CAD = Computer Aided Design) wird zur Erstellung von technischen Zeichnungsunterlagen für Werkstücke so vorgegangen, daß ausgehend von einein Gesamtentwurf deduktiv in hierarchischen Schritten über Baugruppenentwürfe zu Einzelteilentwürfen übergegangen wird, so wie dies auch beim herkömmlichen Konstruktionszeichnen der Fall ist. Die bei den Einzelteilentwürfen vorgesehenen Formelemente, wie z. B. Gewindebohrungen, müssen jeweils gesondert auf dein CAD-System erstellt werden.

In der erwähnten Zeitschrift "COMPUTERS IN INDUSTRY" ist ein rechnergestütztes Prozeßplanungssystem beschrieben, bei welchem Konstruktionsinformationen, die z. B. von einem CAD-System stammen, in Befehle für eine Bearbeitungsmaschine umgesetzt werden. Hierzu umfaßt das bekannte Prozeßplanungssystem Informationen über Bearbeitungsvorgänge, Maschinenparameter. Bearbeitungszeiten und Werkzeugspezifikationen. Dabei wird ein datentechnisches Werkstückmodell in Form von CAD-Daten vorausgesetzt, ohne zu erläutern, wie ein derartiges Werkstückmodell ohne technische Zeichnung erstellt wird.

In ähnlicher Weise ist in der Zeitschrift "WT/WERKSTATTECHNIK", Bd. 77, Nr. 3, März 1987, Seiten 129 - 133, herausgegeben von Springer-Verlag, Berlin, beschrieben, wie die in einer - als vorhanden vorausgesetzten - technischen Zeichnung vorhandenen Informationen bei der Ausführung von Planungstätigkeiten für die Fertigung berücksichtigt werden. Dafür werden wiederum die geometrischen Informationen eines Werkstücks in Form von CAD-Daten benötigt. Wie die technische Zeichnung auf dem CAD-System erstellt wird, bleibt unerwähnt.

Die Aufgabe der Erfindung besteht demgegenüber darin, ein Verfahren anzugeben, das bei der Herstellung eines datentechnischen Werkstückmodells die Erstellung von Einzelteilentwürfen vereinfacht.

Diese Aufgabe wird erfindungsgemäß durch die kennzeichnenden Merkmale des Patentanspruchs 1 gelöst.

Vorteilhafte Ausgestaltungen und Weiterbildungen des erfindungsgemäßen Verfahrens ergeben sich aus den Unteransprüchen.

Die Erfindung beruht auf der Überlegung, für ein CAD-Verfahren einen Satz von Formelementen zur Verfügung zu stellen. Die einzelnen Formelemente sind in einem Speicher mit ihrer Geometrie abgelegt und können mit Hilfe eines graphischen Auswahlmenues in jede Modellzelle des CAD-Verfahrens, d.h., zu jeder zu bearbeitenden Einzelteilgeometrie, addiert werden. Das Formelement auf der Fertigungszeichnung findet in der Regel seine Entsprechung im Formwerkzeug, das zu seiner Herstellung erforderlich ist.

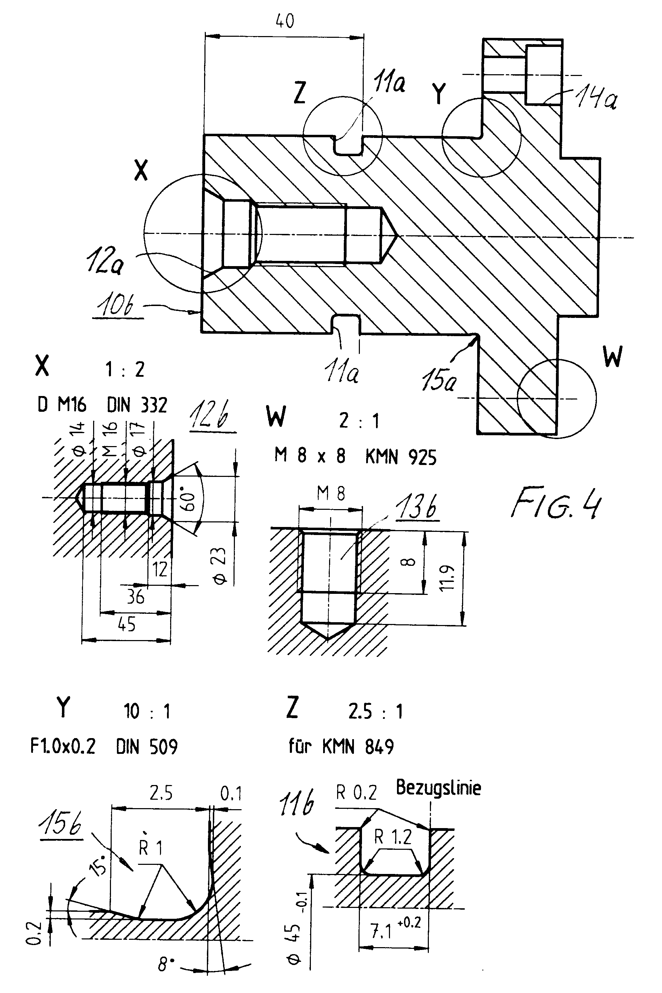

Als Formelemente stehen z.B. zur Verfügung:
DIN 74 Blatt 1 Senkung Form A für Senkschrauben M3-M10
DIN 74 Blatt 2 Senkung Form K für Zylinderschr. M5-M24
DIN 76 Teil 1 Gewindefreistich Form A Regelfall 1,5-6
DIN 332 Blatt 1 Zentrierbohrung Form A 2,5-10
DIN 471 Sicherungsringnut f. Wellen 2,15-5,15
DIN 472 Sicherungsringnut f. Naben 2,15-5,15
DIN 6885 Blatt 1 Paßfedernut für Wellen 6-40
DIN 6885 Blatt 1 Paßfedernut für Naben 6-40
Die Formelemente werden dann eingesetzt, wenn das zu konstruierende Einzelteil sich im wesentlichen aus einer Grundgeometrie und einer beliebigen Anzahl von Formelementen zusammensetzt. Bei den meisten Formelementen kann gewählt werden, ob es in der richtigen Einbaulage an Ort und Stelle in der Einzelteildarstellung (Ansicht bzw. Schnitt) dargestellt werden soll oder später in der fertigen Zeichnung eine separate Detaildarstellung (z.B. "Einzelheit "W"; Fig. 4) genügt. Bei Darstellung von Formelementen in der Einzelteildarstellung werden die Sichtbarkeitsverhältnisse von Schraffuren, Grundgeometrien und Formelementen berücksichtigt. Formelelemente, die nicht in der Einzelteildarstellung sichtbar gemacht werden sollen, werden komplett ausgeblendet. Die zugehörigen, separaten Detaildarstellungen werden in der fertigen Zeichnung des Einzelteils automatisch addiert.

Bei Formelementen mit Bohrungscharakter werden die inneren Umlaufkanten teilweise weggelassen, um beim Zusammenbau des konstruierten Einzelteils mit anderen Einzelteilen die Darstellung mit dem Verbindungselement ( Normteile wie Schrauben und dgl. ) zu erleichtern. Diese Normteile sind ebenfalls als Satz in einem Speicher abgelegt.

Die Erfindung wird anhand von Ausführungsbeispielen in den Zeichnungen näher erläutert. Es zeigt:
- Fig. 1: ein Blockschema für die Aufgliederung einer zu konstruierenden Machine in Baugruppen und Einzelteile sowie für die Konstruktion der Einzelteile mit Hilfe des erfindungsgemäßen Verfahrens aus einer frei wählbaren Grundgeometrie und abrufbar gespeicherten Formelementen;
- Fig. 2: ein Beispiel für die Grundgeometrie eines Einzelteils;
- Fig. 3: die mit lagerichtig gedrehten Formelementen und Schraffur versehene Grundgeometrie gemäß Fig. 2;
- Fig. 4: die aus Fig. 3 entwickelte Einzelteilzeichnung mit zugehörigen Detaildarstellungen der Formelemente;
- Fig. 5: eine als graphisches Auswahlmenue angebotene Übersicht über die verfügbaren Klassen von Formelementen;
- Fig. 6a - Fig. 10a: verschiedene Beispiele von in den einzelnen Formelemente-Klassen verfügbaren Normreihen;
- Fig. 6b - Fig. 10b: verschiedene Beispiele der für die Normreihen gemäß Fig. 6a bis 10a verfügbaren Formelemente.

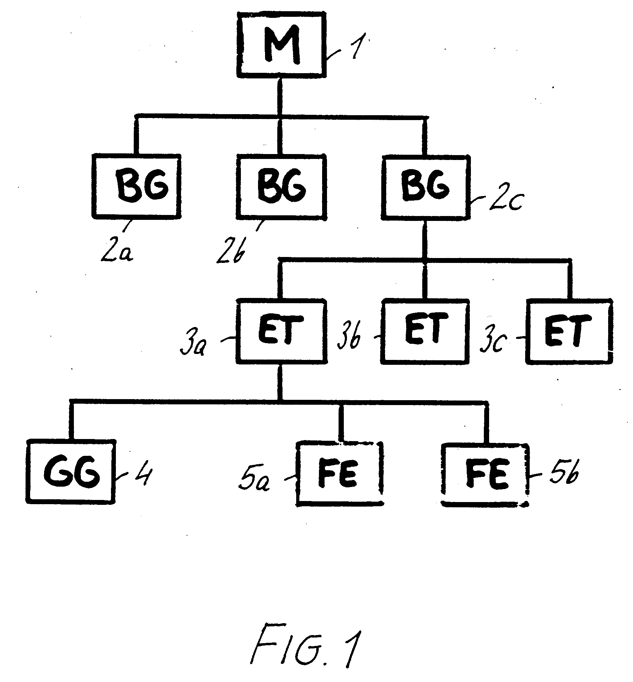

Für die Konstruktion einer Maschine M sind gemäß Fig. 1 neben dem Gesamtentwurf 1 für die Maschine M Entwürfe 2a bis 2c der einzelnen Baugruppen BG erforderlich, wobei für wenigstens eine der Baugruppen Einzelteilentwürfe 3a bis 3c der betreffenden Einzelteile ET anzufertigen sind. Zur Konstruktion eines oder aller Einzelteile ET wird die Grundgeometrie GG als Modell 4 auf einer CAD-Anlage erstellt und mit abrufbar gespeicherten Formelementen FE (Formelementedarstellungen 5a, 5b) ergänzt. Die Konstruktion der Maschine M erfolgt somit deduktiv in hierarchischen Schritten ausgehend von dem Gesamtentwurf 1 zu den Einzelteilentwürfen 3a bis 3c ( und weiterer, in Fig. 1 nicht gezeigter Einzelteilentwürfe für die Baugruppenentwürfe 2a und 2b, falls erforderlich ).

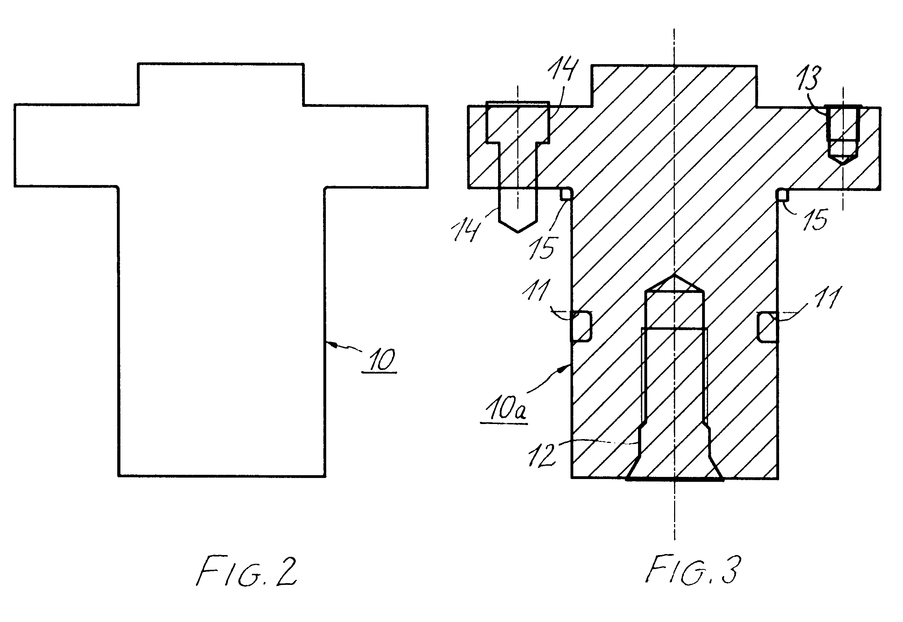

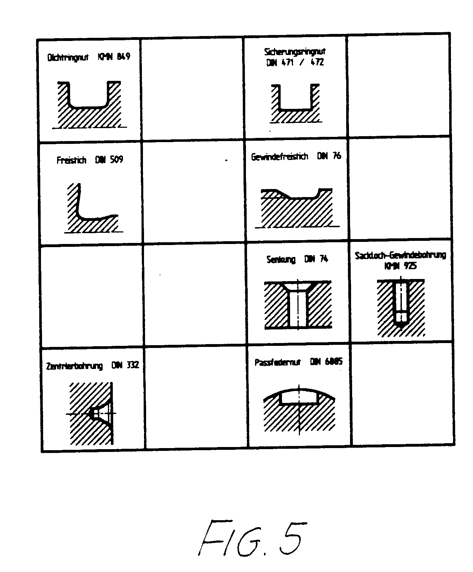

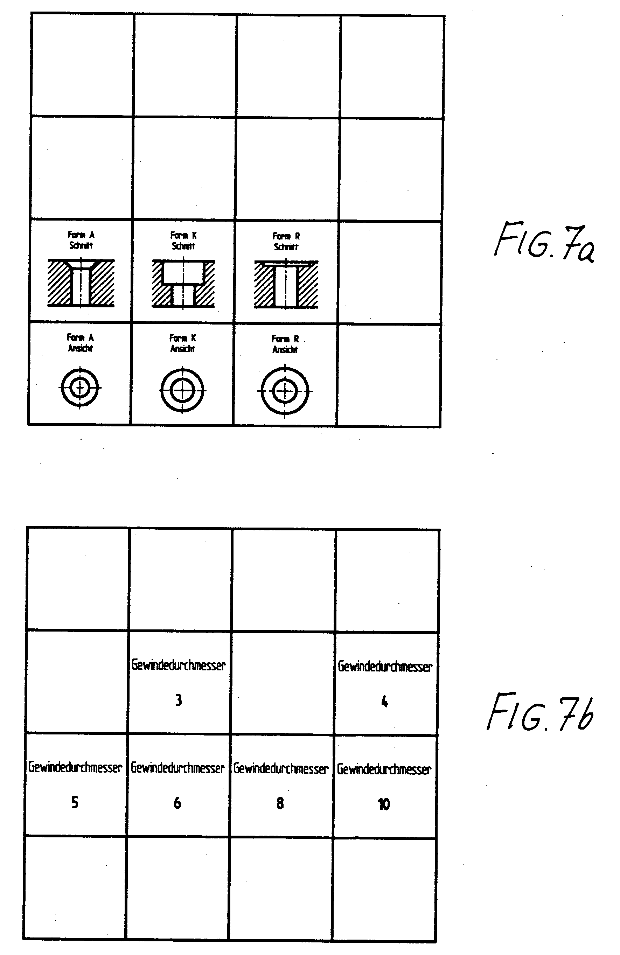

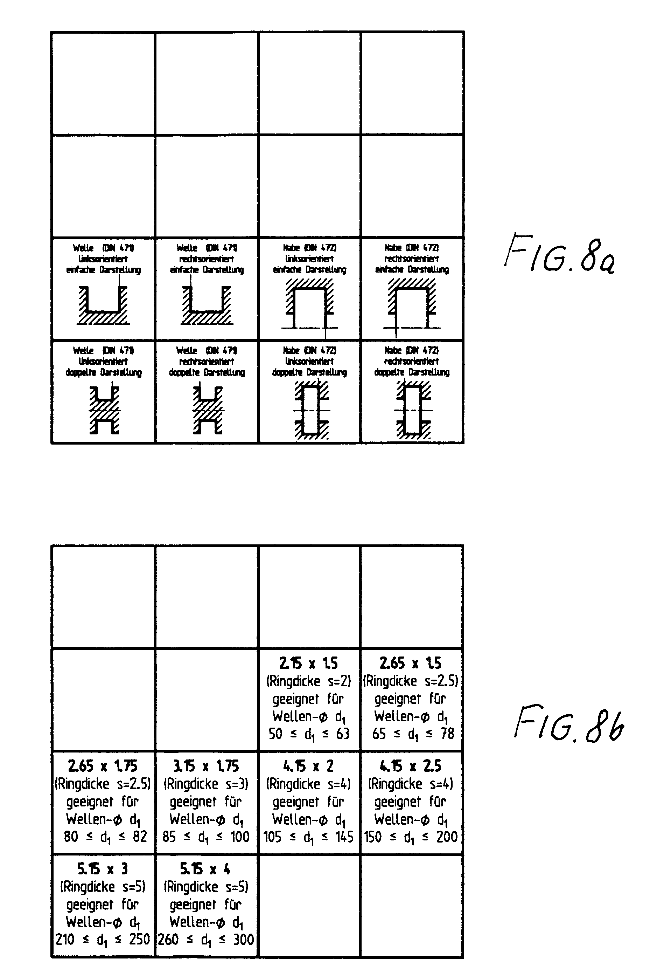

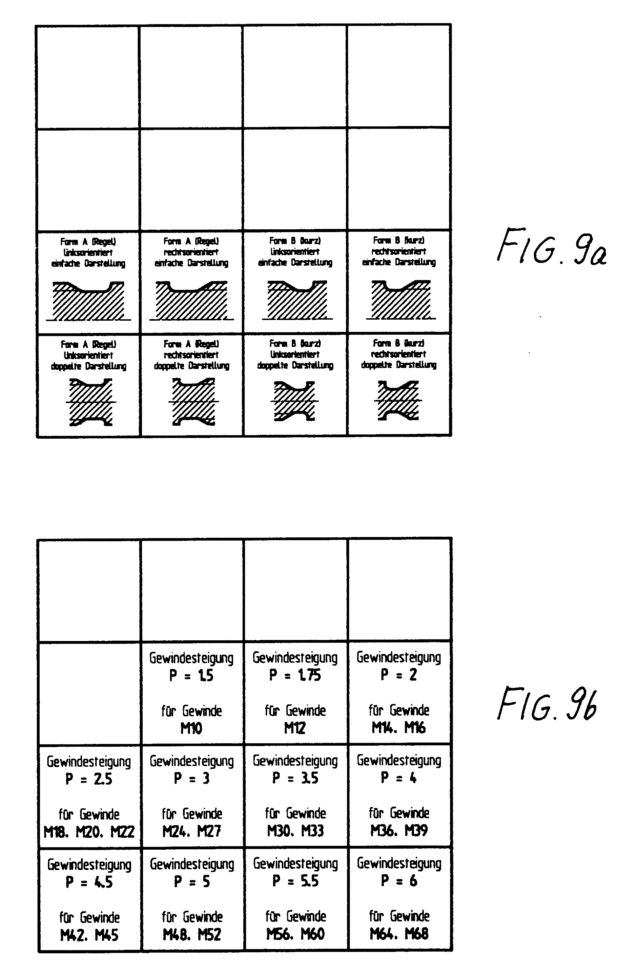

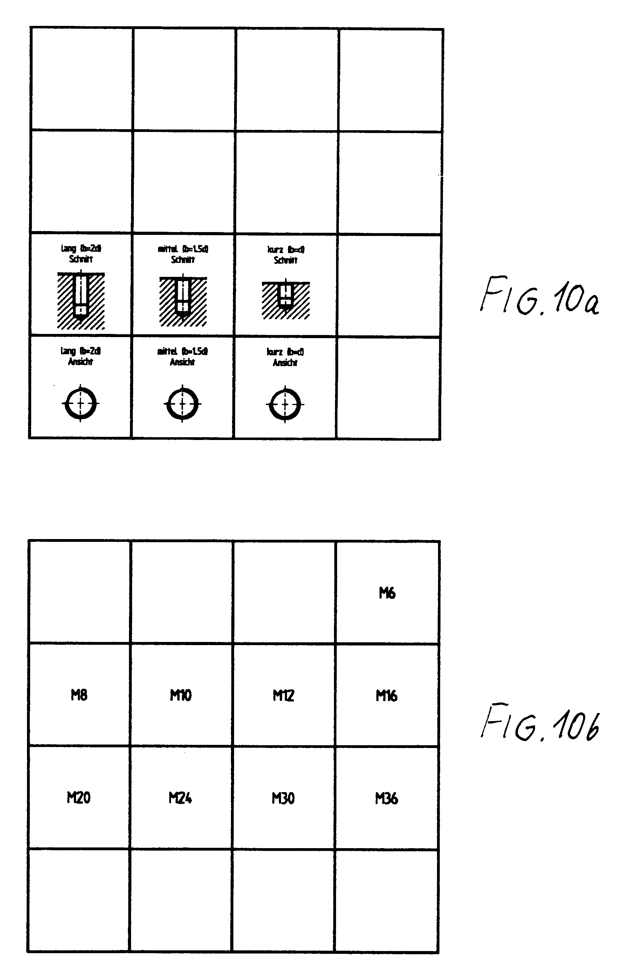

In Fig. 2 ist ein Beispiel für die Grundgeometrie 10 eines Einzelteils ET dargestellt. Die Grundgeometrie 10 besteht aus einem rotationssymmetrischen, geschlossenen Kurvenzug und wird der Konstruktionsaufgabe entsprechend geformt. In dem betrachteten Einzelteil sollen gemäß der weiteren Konstruktionsaufgabe eine Zentrierbohrung mit Gewinde 12 z.B. zur Aufnahme einer Schraube M16, eine Dichtringnut 11 am Umfang des zylindrischen Abschnitts der Grundgeometrie 10, eine Gewindesackbohrung 13 und eine Senkung 14 am Flanschabschnitt der Grundgeometrie 10 sowie ein Freistich 15 am Übergang vom zylindrischen Abschnitt zum Flanschabschnitt der Grundgeometrie 10 vorgesehen werden. Alle Formelemente 11 bis 15 sind, wie schon erwähnt, aus einem Speicher abrufbar, wie anhand der Fign. 5 bis 10b noch näher erläutert werden soll. Zunächst genügt es, daß die erforderlichen Formelemente in der gewünschten Abmessung verfügbar sind und in der gewünschten Einbaulage in der Grundgeometrie 10 positioniert werden, wie anhand der Fig. 3 veranschaulicht ist. Dabei ist die Grundgeometrie 10 bereits mit einer Schraffur versehen, welche auch noch die positionierten Formelemente 11 bis 15 überdeckt (vergleichsweise geringer Rechenaufwand).

Wie aus dem fertigen Einzelteilentwurf nach Fig. 4 ersichtlich ist, werden durch bestimmte CAD-Verarbeitungsroutinen die Schraffur aus den Formelmenten 11, 12, 14 und 15, ferner bei den Formelementen 11 und 15 die Grundgeometrie im Bereich dieser radialen Formelemente sowie bei allen Formelementen die überstehenden Teile des Formelementes ausgeblendet.

Die so aus den Formelementen 11 bis 15 entstandenen Darstellungen sind in Fig. 4 mit den Bezugszeichen 11a, 12a, 14a und 15a versehen. Das Formelement 13 ist in dem Einzelteilentwurf nach Fig. 4 nicht dargestellt; vielmehr ist durch einen Kreis mit der Bezeichnung "W" auf die Detaildarstellung "W" des Formelementes verwiesen. Darüber hinaus sind auch die in dem Einzelteilentwurf nach Fig. 4 dargestellten Formelemente 11, 12 und 15 zusätzlich mit maßstabsgetreuen Detaildarstellungen "Z", "X" bzw. "Y" veranschaulicht. Diese Detaildarstellungen mit der zugehörenden Vermaßung werden automatisch aus dem Formelemente-Speicher abgerufen und durch den Anwender auf der Zeichnung positioniert (vgl. detaillierte Formelementedarstellungen 11b, 12b und 13b). Ferner sind die durch die Hinzufügung der Formelemente ergänzten Darstellungen der Grundgeometrie in den Fign. 3 und 4 mit den Bezugszeichen 10a bzw. 10b kenntlich gemacht.

Wie man aus dem Beispiel nach Fig. 4 deutlich erkennt, stellen die Formelemente 11 bis 15 funktions- und ( insbesondere das Formelement 15 ) fertigungstechnisch bedingte Ausprägungen der Grundgeometrie 10 dar.

Bei dem späteren, nicht gezeigten Zusammenbau der einzelnen Einzelteilentwürfe zu dem betreffenden Bauteilentwurf können die Verbindungselemente zwischen den Einzelteilen ebenfalls als normierte Teile aus einem Vorrat an Normteilen NT abgerufen werden, z.B. die für die Formelemente 12, 13 und 14 passenden Schrauben. Ferner können Schweißverbindungen zwischen den Einzelteilen ET als Formelemente verfügbar gemacht werden, die dann bei dem Zusammenbau abgerufen werden.

Die verfügbaren Formelemente FE und Normteile NT sind in Form eines graphischen Auswahlmenues gemäß Fig. 5 abrufbar. Die Fig. 5 zeigt dabei die verfügbaren Klassen von Formelementen, wie z.B Dichtringnut, Sicherungsringnut, Freistich, Geschwindefreistich, Senkung, Sackloch-Gewindebohrung, Zentrierbohrung, Paßfedernut.

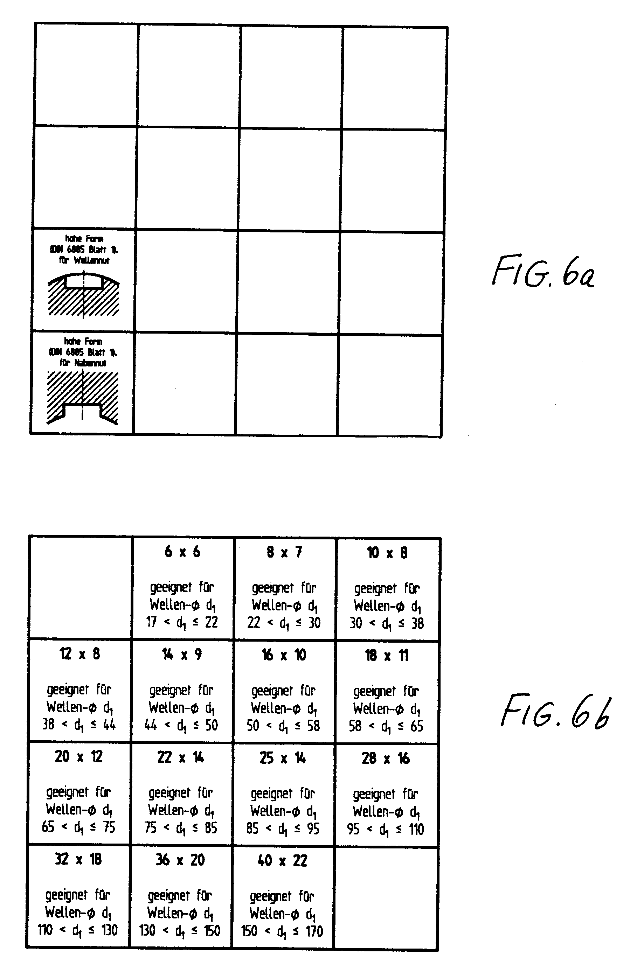

Nach Auswahl der gewünschten Formeelementeklasse werden die verfügbaren Normreihen ( Fign. 6a bis 10a) und die zu der gewählten Normreihe vorhandenen Formelemente ( Fign. 6b bis 10b), gegebenenfalls mit Verwendungshinweisen ("geeignet für Wellendurchmesser zwischen 17 und 22 mm"; Fig. 6b für die Wellennut 6×6) angezeigt. Das meist ohne Zuhilfenahme eines Normblattes ausgewählte Formelement wird dann in dem CAD-Modell dargestellt, wo es in der Grundgeometrie positioniert wird ( Fig. 3 ).

Mit Hilfe des erfindungsgemäßen Verfahrens lassen sich Einzelteile funktions- und fertigungsgerecht auf einfache Weise unter Ausnutzung der gespeicherten Formelemente und Normteile auf einem beliebigen CAD-System konstruieren.

Des weiteren ist es möglich, die bei der Erstellung der Einzelteilentwürfe benutzten Datensätze zumindest teilweise für die Erstellung eines Fertigungsablaufplanes und gegebenenfalls eines NC-Steuerprogramms zu verwenden, da den benutzten Formelementen in den Einzelteilentwürfen entsprechende Fertigungsmakros mit ihren Fertigungsverfahren und Werkzeugen bzw. NC-Werkzeugen gegenüberstehen, welche zur Herstellung der Formelemente auf herkömmliche Weise bzw. auf NC-Werkzeugmaschinen benutzt werden. In dieser fertigungstechnisch orientierten Entwurfserstellung liegt ein weiterer Vorteil des erfindungsgemäßen Verfahrens.

## Patentansprüche

1. Verfahren zum rechnergestützten Erstellen von technischen Fertigungsunterlagen für Werkstücke, bei dem in hierarchischen Schritten deduktiv von einen Gesamtentwurf (M) ausgehend zu Einzelteilentwürfen (ET) übergegangen wird, derart, daß zunächst die Grundgeometrie der Einzelteile (ET) festgelegt und mit einer Schraffur versehen wird und anschließend die Grundgeometrie (10) zumindest eines Einzelteils mit normierten, funktions- und fertigungstechnisch bedingten Ausprägungen in Form von Formelementen (FE; 11-15) zur Einzelteilgeometrie ergänzt wird, **dadurch gekennzeichnet**, daß vordefinierten Formelementen (11-15) fixe und variable Eigenschaften in Form von gespeicherten, abrufbaren Datensätzen zugewiesen werden, daß die abgerufenen Formelemente (11-15) an der gewünschten Stelle der betreffenden Grundgeometrie (10) addiert und in der gewünschten Einbaulage in der Grundgeometrie (10) positioniert werden, wobei die Schraffur der Grundgeometrie (10) zunächst noch die positionierten Formelemente (11-15) überdeckt, und daß durch CAD-Verarbeitungsschritte
- die Schraffur aus den positionierten Formelementen (11-15),
- die Grundgeometrie (10) im Bereich von radialen Formelementen (11,15), und
- alle über die Grundgeometrie (10) überstehenden Teile der Formelemente (11-15)
ausgeblendet werden.

2. Verfahren nach Anspruch 1, **dadurch gekennzeichnet**, daß die Einzelteilgeometrien einer aus wenigstens zwei Einzelteilen (ET) bestehenden Baugruppe durch weitere Formelemente (FE), beispielsweise Schweißnaht, oder durch vordefinierte, abrufbare Normteile (NT) ergänzt werden, welche auf die entsprechenden Formelemente (FE) abgestimmt sind, beispielsweise Schrauben für die passenden Gewindebohrungen.

3. Verfahren nach Anspruch 1 oder 2, **dadurch gekennzeichnet**, daß zur Auswahl von Formelementen (FE) die vordefinierten Formelemente (FE) und gegebenenfalls die vordefinierten Normteile (NT) als grafisches Menue derart abrufbar sind, daß zunächst in einer Zusammenschau sämtliche verfügbaren Klassen von Formelementen (FE) bzw. Normteilen (NT) angezeigt werden (Fig. 5).

4. Verfahren nach Anspruch 3, **dadurch gekennzeichnet**, daß für eine ausgewählte Klasse von Formelementen (FE) bzw. Normteilen (NT) die darin verfügbaren Normreihen in gegebenenfalls unterschiedlichen Darstellungsarten angezeigt werden (Figuren 6a, 7a, 8a, 9a, 10a).

5. Verfahren nach Anspruch 4, **dadurch gekennzeichnet**, daß für eine ausgewählte Normreihe die verfügbaren Formelemente (FE) bzw. Normteile (NT) mit ihren normierten Abmessungen angezeigt werden (Figuren 6b, 7b, 8b, 9b, 10b).

6. Verfahren nach einem der Ansprüche 1 bis 5, **dadurch gekennzeichnet**, daß auf einer Fertigungszeichnung anstelle oder zusätzlich zu der ergänzten Grundgeometrie die zumindest zu einem verwendeten Formelement (FE) gehörende Einzelheitdarstellung maßstäblich darstellbar ist.

## Claims

1. Method for the computer-aided preparation of technical manufacturing drawings for workpieces, wherein a progression is made deductively in hierarchical steps starting from a general overall design (M) to individual part designs (ET) in such a manner that, initially, the basic geometry of the parts (ET) is established and provided with hatching and thereafter the basic geometry (10) of at least one individual part is amplified with standardized function-determined and manufacturing-determined definitions in the form of shape elements (FE; 11-15) to the individual part geometry, characterized in that fixed and variable properties in the form of stored data sets that may be called up are assigned to predefined shape elements (11-15), that the called-up shape elements (11-15) are added at the desired position to the relevant basic geometry (10) and are positioned in the desired position and orientation in the basic geometry (10), the hatching of the basic geometry (10) initially still overlapping the positioned shape elements (11-15), and that, by CAD processing steps,
- the hatching is masked out of the positioned shape elements (11-15),
- the basic geometry (10) is masked in the region of radial shape elements (11, 15), and
- all parts of the shape elements (11-15) projecting beyond the basic geometry (10) are masked out.

2. Method according to Claim 1, characterized in that the individual part geometries of an assembly consisting of at least two individual parts (ET) are amplified by futher shape elements (FE), for example weld seam, or by predefined standardized parts (NT) that can be called up, which are adapted to the corresponding shape elements (FE), for example screws for the matching threaded bores.

3. Method according to Claim 1 or 2, characterized in that, for the selection of shape elements (FE), the predefined shape elements (FE) and where applicable the predefined standardized parts (NT) can be called up as a graphic menu in such a way that initially all the available classes of shape elements (FE) and standardized parts (NT) respectively are displayed in an overall view (Fig. 5).

4. Method according to Claim 3, characterized in that, for a selected class of shape elements (FE) or standardized parts (NT) respectively, the standard rows available therein are displayed in possibly different types of illustration (Figures 6a, 7a, 8a, 9a, 10a).

5. Method according to Claim 4, characterized in that, for a selected standard row, the available shape elements (FE) and standardized parts (NT) respectively are displayed with their standard dimensions (Figures 6b, 7b, 8b, 9b, 10b).

6. Method according to one of Claims 1 to 5, characterized in that, on a manufacturing drawing, instead of or in addition to the amplified basic geometry, the individual illustration belonging to at least one shape element (FE) used may be illustrated to scale.

## Revendications

1. Procédé pour établir, par ordinateur, des bases techniques de production de pièces à usiner, dans lequel on passe d'une ébauche globale (M) à des ébauches de pièces individuelles (ET), par étapes hiérarchiques et par déduction, de telle sorte que la configuration géométrique de base des pièces individuelles (ET) soit tout d'abord arrêtée et munie d'une zone hachurée, après quoi la configuration géométrique de base (10) d'au moins une pièce individuelle est complétée, par des empreintes normalisées résultant de considérations techniques de fonctionnement et de production, et se présentant comme des éléments de conformation (FE ; 11-15), pour obtenir la configuration géométrique des pièces individuelles, caractérisé par le fait que des propriétés constantes et variables, revêtant la forme de groupes de données mémorisés et interrogeables, sont affectées à des éléments de conformation prédéfinis (11-15) ; par le fait que les éléments de conformation (11-15) interrogés sont ajoutés à l'emplacement souhaité de la configuration géométrique de base considérée (10) et sont positionnés, dans cette configuration géométrique de base (10), dans la position d'intégration souhaitée, la zone hachurée de ladite configuration géométrique de base (10) recouvrant encore, dans un premier temps, les éléments de conformation (11-15) positionnés ; et par le fait que, par des étapes de façonnage assisté par ordinateur,
- la zone hachurée est supprimée des éléments de conformation (11-15) positionnés,
- la configuration géométrique de base (10) est supprimée dans la région d'éléments radiaux de conformation (11, 15), et
- toutes les parties des éléments de conformation (11-15) saillant au-delà de la configuration géométrique de base (10) sont supprimées.

2. Procédé selon la revendication 1, caractérisé par le fait que les configurations géométriques de pièces individuelles d'un groupe structurel comprenant au moins deux pièces individuelles (ET) sont complétées par d'autres éléments de conformation (FE), par exemple un cordon de soudure, ou bien par des parties normalisées (NT) prédéfinies et interrogeables qui sont coordonnées avec les éléments de conformation (FE) correspondants, par exemple des vis destinées aux trous taraudés complémentaires.

3. Procédé selon la revendication 1 ou 2, caractérisé par le fait que, pour sélectionner des éléments de conformation (FE), les éléments de conformation (FE) prédéfinis et éventuellement les parties normalisées (NT) prédéfinies sont interrogeables, sous la forme d'un menu graphique, de telle sorte que toutes les classes d'éléments de conformation (FE) ou de parties normalisées (NT), respectivement disponibles, apparaissent tout d'abord dans un récapitulatif visuel (figure 5).

4. Procédé selon la revendication 3, caractérisé par le fait que, pour une classe d'éléments de conformation (FE) ou de parties normalisées (NT) respectivement sélectionnée, les tableaux normatifs qui y sont disponibles sont visualisés selon des modes de représentation éventuellement différents (figures 6a, 7a, 8a, 9a, 10a).

5. Procédé selon la revendication 4, caractérisé par le fait que, pour un tableau normatif sélectionné, les éléments de conformation (FE) ou les parties normalisées (NT) respectivement disponibles sont visualisés avec leurs cotes normalisées (figures 6b, 7b, 8b, 9b, 10b).

6. Procédé selon l'une des revendications 1 à 5, caractérisé par le fait que l'illustration de détail se rapportant au moins à un élément de conformation (FE) utilisé peut être représentée à l'échelle, sur un dessin de production, à la place ou en plus de la configuration géométrique de base complétée.
